(19)

(11) **EP 2 349 623 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **09810759.2**

(22) Anmeldetag: **13.11.2009**

(51) Int Cl.:
***B23D 77/02*** *(2006.01)*

(86) Internationale Anmeldenummer:
**PCT/DE2009/001596**

(87) Internationale Veröffentlichungsnummer:
**WO 2010/054641 (20.05.2010 Gazette 2010/20)**

(54) **MEHRSCHNEIDIGES SPANABHEBENDES BOHRUNGS-NACHBEARBEITUNGSWERKZEUG**

MULTI-EDGED MACHINING TOOL FOR POST-MACHINING OF BORES

OUTIL DE REPRISE D'ALÉSAGES À PLUSIEURS ARÊTES DE COUPE ET À ENLÈVEMENT DE MATIÈRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.11.2008 DE 102008057296**

(43) Veröffentlichungstag der Anmeldung:
**03.08.2011 Patentblatt 2011/31**

(73) Patentinhaber: **Gühring OHG**
**72458 Albstadt (DE)**

(72) Erfinder:
- **BITZER, Jochen**
  **72461 Albstadt-Truchtelfingen (DE)**
- **HECKEL, Gerd**
  **90617 Puschendorf (DE)**

(74) Vertreter: **Meitinger, Thomas Heinz**
**Bode Meitinger**
**Patentanwalts GmbH**
**Hermann-Schmid-Strasse 10**
**80336 München (DE)**

(56) Entgegenhaltungen:
**JP-A- 1 310 816** **JP-A- 52 131 293**
**JP-U- 56 028 824** **JP-U- 59 055 624**

EP 2 349 623 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein mehrschneidiges spanabhebendes Bohrungs-Nachbearbeitungswerkzeug bzw. -Feinbearbeitungswerkzeug, insbesondere in der Ausgestaltung als Reibahle, gemäß dem Oberbegriff des Patentanspruchs 1.

Solche Werkzeuge werden benötigt, wenn es darum geht, besonders tief im Werkstück liegende Bohrungen bzw. mehrere axial beabstandete Bohrungen gleicher Abmessung und Güte in einem einzigen Arbeitshub hochpräzise zu bearbeiten. Im Einzelnen werden derartige Bohrungen bei sogenannten Lagergassen benötigt, die im Zylinderkopf einer Brennkraftmaschine entweder zur Aufnahme der Lagerbuchsen oder aber zur Ausbildung der Lagerstellen der Kurbelwelle selbst dienen. Ein solches Bohrungs-Feinbearbeitungswerkzeug kann in einem solchen Fall ohne weiteres eine Schaftlänge von über 400 mm haben, wobei der kleinste Nenndurchmesser des Schneidensatzes in der Größenordnung von etwa 20 mm liegen kann.

Da die Bohrungen der Lagergasse nicht nur im Durchmesser sehr eng toleriert sind, sondern auch eine sehr eng tolerierte Lagezuordnung zueinander haben, besteht eine besondere Schwierigkeit bei der Gestaltung der einschlägigen Bohrungs-Nachbearbeitungswerkzeuge darin, dass die Stabilität des Werkzeugs mit vertretbarem Aufwand derart hoch gehalten wird, dass die vom Hersteller geforderten Lagetoleranzen auch nach langem Standweg der Werkzeuge noch eingehalten können. Dabei ist zu berücksichtigen, dass sowohl die Durchmessertoleranzen als auch die Zylinder Lagetoleranzen der herzustellenden Bohrungen im $\mu$m-Bereich liegen.

Es gibt verschiedene Ansätze, derartige Werkzeuge zu stabilisieren. Es ist beispielsweise üblich, die über den Umfang des Werkzeugs häufig gleichmäßig verteilten Schneiden durch dazwischen liegende Führungsleisten zu stabilisieren. Ein solches Werkzeug ist beispielsweise im Dokument DE 197 19 893 A1 beschrieben.

Mit diesem Aufbau des Reibwerkzeugs ist es allerdings nicht möglich, axial weit auseinander liegenden Bearbeitungsoberflächen mit der vorstehend beschriebenen hohen Präzision und Maßhaltigkeit herzustellen. Darüber hinaus zeigt sich bei einem derartigen bekannten Aufbau der Nachteil, dass die Führungsleisten die Flexibilität bei der Gestaltung des Werkzeugs erheblich einschränken, da sie in Umfangsrichtung verhältnismäßig viel Bauraum in Anspruch nehmen und somit die Zahl der Schneiden begrenzen.

Aus den Dokumenten JP 52131293 A und JP-2001310205 A ist ein Werkzeug gemäß dem Oberbegriff des Patentanspruchs 1 bekannt, bei dem über den Umfang gleichmäßig verteilte geradlinige Führungsleisten in den Werkzeugschaft eingebettet werden, wobei sich die Führungsleisten zumindest teilweise von der Spitze des Werkzeugs im Schneidenbereich weg erstrecken. Die Führungsleisten bestehen aus Hartmetall, d.h. aus einem Material, welches härter als der Stahl des Trägermaterial ist. Um die Stabilität des Werkzeugs ausreichend hoch zu halten. wird der Schaft des Werkzeugs nahe der Einspannstelle dicker als im Bereich der Werkzeugspitze ausgeführt.

Die Herstellung-eines solchen Feinbearbeitungswerkzeugs ist allerdings verhältnismäßig aufwendig. Die Führungskörper müssen in entsprechende Ausnehmungen des Werkzeugschafts passgenau eingelötet und anschließen exakt auf Passung geschliffen werden. Ein besonderer Nachteil dieser bekannten Werkzeuge besteht allerdings darin. dass das Anwendungsgebiet eines derart aufgebauten Werkzeugs punktuell beschränkt ist. Mit anderen Worten, ein derart aufgebautes Werkzeug kann nur für eine ganz bestimmte Zerspanungsaufgabe eingesetzt werden. d.h. für die Herstellung einer ganz bestimmten Bohrung ganz bestimmter Tiefe.

Der Erfindung liegt deshalb die Aufgabe zugrunde, ein vorzugsweise drehangetriebenes. mehrschneidiges spanabhebendes Bohrungs-Nachbearbeitungswerkzeug zur Bearbeitung tiefer bzw. mehrerer axial beabstandeter Bohrungen gleicher Abmessung und Güte bereitzustellen. mit dem es gelingt, axial verhältnismäßig tief im Werkstück liegende bzw. eine Vielzahl von axial beabstandeten Bohrungen gleicher Abmessung und Güte mit großer Präzision. Maßhaltigkeit und Oberflächengüte herzustellen. wobei der Aufbau so gehalten sein soll. dass ein Höchstmaß an Flexibilität bezüglich der Anpassung des Werkzeugs an unterschiedliche Bohrungsgeometrien (Tiefe und Durchmesser) begeben ist.

Wie beansprucht, wird ein mehrschneidiges spanabhebendes Bohrung-Nachbearbeitungswerkzeug bzw. -Feinbearbeitungswerkzeug, insbesondere eine Reibahle, mit den Merkmalen nach Anspruch 1 zur Bearbeitung tiefer bzw. mehrerer axial beabstandeter Bohrungen gleicher Abmessung und Güte, wie z.B. von Bohrungen zur Aufnahme von Lagerbuchsen für eine Nockenwelle bereitgestellt. Das beanspruchte Werkzeug umfasst:

zumindest einen Schneidensatz mit vorbestimmtem Nenndurchmessermaß und
über den Umfang im Wesentlichen gleichmäßig verteilten Schneiden und
eine dazu axial versetzte Führungskörperanordnung.

Dabei ist die Führungskörperanordnung integraler Bestandteil eines aus Vollhartmetall (VHM) bestehenden, im Wesentlichen zylindrischen Führungskörpers, der zumindest n in gleichmäßigem Umfangsabstand zueinander stehende, wendelförmig verlaufende Führungsstege ausbildet, und die Führungssteg erstrecken sich jeweils über einen Zentri-bzw. Umschlingungswinkel, der größer als 360°/n ist, wobei gilt:

$$n \geq 2.$$

Erfindungsgemäß ist dabei ferner den Führungsstegen ist ein Nenndurchmessermaß zugewiesen, das im Wesentlichen um das doppelte Maß eines sich im Einsatz des Werkzeugs aufbauenden Schmierspalts kleiner ist als das Nenndurchmessermaß des in Vorschubrichtung benachbarten Schneidensatzes.

Weiterhin erfindungsgemäß ist das Werkzeug modular aufgebaut, wobei der Führungskörper über eine Schrumpfverbindung einerseits mit einem den Schneidensatz tragenden ersten Schneidenmodul und andererseits mit einem Schaftteil dreh- und verschiebefest verbunden ist.

In dem beanspruchten Werkzeug wird die Führungskörperanordnung zum integralen Bestandteil eines aus Harnstoff, insbesondere Vollhartmetall (VHM) bestehenden separaten Bauteils, das die Brücke zwischen Schneidensatz an der Spitze des Werkzeugs und dem Schaft nahe der Einspannstelle bildet. Über die Vielzahl der im gleichmäßigen Umfangsabstand zueinander stehenden, wendelförmig verlaufenden Führungsstege wird nicht nur für eine hervorragende Führung des Werkzeugs auch bei tiefsten Bohrungen gesorgt, sondern es ergibt sich ferner der besondere zusätzliche Vorteil, dass der Führungskörper zum modularen Bestandteil des Bohrungs-Nachbearbeitungswerkzeugs wird. Dies hat den Vorteil, dass der Führungskörper individuell unter Anpassung an das gerade vorliegende Zerspanungsproblem ausgewählt und mit den übrigen Komponenten des auf das Zerspanunvgsproblem genau zugeschneiderten Werkzeugs zusammengestellt werden kann. Das Werkzeug lässt sich auf diese Weise wesentlich wirtschaftlicher herstellen.

Von besonderem, zusätzlichem Vorteil ist dabei, dass die Ausbildung des Führungskörper aus Vollhartmetall dem Werkzeug zusätzliche Stabilität verleiht, die im Zusammenwirken mit den summarisch zumindest einmal über 360° verlaufenden Führungsstege dafür sorgt, dass der Schneidensatz des Werkzeugs mit höchster Präzision arbeitet. Aufgrund des wendeiförmigen Verlaufs der Führungsstege hat das Werkzeug in allen Richtungen eine durchgehende Abstützung, so dass der Schnittkraft jeder Schneide ein entsprechendes Stützmoment entgegenwirkt.

Erfindungsgemäß ist das Werkzeug modular aufgebaut, wobei der Führungskörper über eine Schrumpfverbindung einerseits mit einem den Schneidensatz tragenden ersten Schneidenmoduls und andererseits mit einem Schaftteil dreh- und verschiebefest verbunden wird, so dass ein Höchstmaß an Stabilität erzielt werden kann. Diese Verbindung hat darüber hinaus den Vorteil, dass sie in sich selbstzentrierend ist, so dass eine umfangreiche Nachbearbeitung des Führungskörper und/oder des Schneidensatzes nach dem Fügen der Komponenten entfallen kann.

Vorteilhafte Weiterbildungen sind Gegenstand der Unteransprüche.

Die Führung des Werkzeugs kann durch die Maßnahmen des Anspruchs 3 noch weiter verbessert werden. In diesem Fall kommt ein besonders gestalteter Führungsleistensatz zur Anwendung, der in Vorschubrichtung hinter dem Schneidensatz angeordnet und von Schneideinsätzen gebildet ist, die jeweils mit den Schneiden des in Vorschubrichtung des Werkzeugs benachbarten Schneidensatzes axial fluchten.

Die Schneideinsätze des Führungsleistensatzes, die vorzugsweise zylindrisch geschliffen sind, haben ein Nenndurchmessermaß, das im 1/1000-stel-Bereich kleiner ist als das Nenndurchmessermaß des in Vorschubrichtung benachbarten Schneidensatzes. Diese Nennmaßdifferenz liegt in der Größenordnung des doppelten sich im Einsatz des Werkzeugs aufbauenden Schmierspalts zur vom vorgeschalteten Schneidensatz gerade bearbeiteten Bohrungswandung. Mit anderen Worten, der Nenndurchmesser des Führungsleistensatzes entspricht im Wesentlichen dem Nenndurchmesser, der den wendeiförmig verlaufenden Führungsstegen des Führungskörpers zugewiesen ist, so dass sich auch im Bereich des Führungsleistensatzes ein Schmierspalt im Bereich zwischen 5 und 9 $\mu$m ergibt. Dieses Schmierspaltmaß kann von einem Schmierfilm eines gängigen, beim Reiben zum Einsatz kommenden Kühl-/Schmiermittels zuverlässig ausgefüllt werden, so dass der Führungsleistensatz ebenso wie der Führungskörper über die wendelförmig verlaufenden Führungsstege in jeder Arbeitsphase wirksam zur Stabilisierung des Werkzeugs herangezogen werden kann.

Weil die hochpräzise positionierten Schneideinsätze des Führungsleistensatzes axial mit den Schneiden des in Vorschubrichtung des Werkzeugs benachbarten Schneidensatzes axial fluchten, zu diesen Schneiden aber axial versetzt sind, hat der Führungsleistensatz keinerlei Einfluss auf die Anzahl der zum Einsatz kommenden Schneiden im Bereich des Schneidensatzes. Mit anderen Worten, die Anzahl der Schneiden im Bereich des Schneidensatzes kann ohne Weiteres angehoben werden, was der Flexibilität bei der Gestaltung des Werkzeugs unter Anpassung an das jeweils vorliegende Zerspanungsproblem weiter zugute kommt.

Insbesondere dann, wenn der Schneidensatz mit einer geraden Anzahl von Schneiden bestückt ist, und diese Schneiden im Wesentlichen gleichmäßig über den Umfang verteilt sind, ergibt sich der besondere Vorteil, dass immer ein Schneidensatz des Führungsleistensatzes im Wesentlichen diametral einer Schneide des in Vorschubrichtung benachbarten Schneidensatzes gegenüberliegt. Auf diese Weise lässt sich eine besonders effiziente Führung der Schneiden des Schneidensatzes realisieren. Darüber hinaus sind die Schneideinsätze des Führungsleistensatzes extrem platzsparend und können im Wesentlichen aufgebaut werden wie die Schneiden der in Vorschubrichtung benachbarten Schneidensätze, was die Herstellung des Werkzeugs weiter vereinfacht.

Es hat sich gezeigt, dass die Einstellung des Nenndurchmessermaßes der Führungsstege und/oder des Führungsleistensatzes auf Werte gemäß Anspruch 4 zu besonders guten Ergebnissen führt, wenn Kühl-/Schmiermittel mit konventionellen Parametern (hinsichtlich Konsistenz. Dichte, Geschwindigkeit und Druck) zugeführt wird. Je nachdem, ob eine Nass- oder Trockenbearbeitung (MMS-Technologie) gewählt wird, und in Abhängigkeit vom Druck des zur Anwendung kommenden Kühl-/Schmiermittels, kann das Differenzmaß der Nenndurchmesser variieren. Für einen Nenndurchmesser des Schneidensatzes von beispielsweise 23 mm kann das Maß der Nenndurchmesser-Differenz etwa zwischen 11 und 17 μm liegen.

Eine besonders gute Stabilisierungswirkung des Führungsleistensatzes, d.h. eine besonders gute Führung, ergibt sich durch die Weiterbildung des Anspruchs 5. Versuche haben gezeigt, dass es ohne Weiteres genügt, die axiale Länge der Schneideinsätze des Führungsleistensatzes auf die Länge des benachbarten Schneidensatzes zu beschränken. Wenn es allerdings die baulichen Verhältnisse zulassen, ist es selbstverständlich möglich, die axiale Länge des Führungsleistensatzes über die Länge des da-vorliegenden Schneidensatzes hinaus zu verlängern, um auf diese Weise die stabilisierende Wirkung noch weiter anzuheben.

Wie schon vorstehend bereits angesprochen, eröffnet der erfindungsgemäße Aufbau des Bohrungs-Naehbearbeitungswerkzeugs in vorteilhafter Weise die Möglichkeit, das Werkzeug modular zusammenzustellen. Mit der Weiterbildung des Anspruchs 6 ergibt sich in einfacher Weise eine Erweiterung der Einsatzmöglichkeiten des Werkzeugs, ohne das Werkzeug insgesamt zu verteuern. Es gelingt mit diesem Aufbau, ein Werkzeug für verschiedenste Anwendungen mit geringem Umrüstaufwand zusammenzustellen. Es ist sogar möglich, den Schneidenmodul, der mit dem Führungskörper dreh- und verschiebefest verbunden ist, lösbar mit dem weiteren Schneidenmodul zu verbinden, da die schmierspaltgeschützte Abstützung des Schneidensatzes für eine ausreichende Stabilisierung sorgen.

Vorteilhafterweise werden die Schneideinsätze des Führungsleistensatzes und/oder zumindest eines der sonst noch vorhandenen Schneidensätze von Schneidplatten gebildet, die eine PKD- (polykristalliner Diamant) -Auflage haben. Derartige PKD bestückte Schneidplatten lassen sich extrem formgenau ausbilden, sind äußerst standfest und nehmen verhältnismäßig wenig Bauraum ein, insbesondere dann, wenn sie mit einem Trägerwerkstoff direkt verlötet werden. Es hat sich überraschenderweise gezeigt, dass sich diese PKD bestückten Schneidplatten selbst dann, wenn sie nur eine Stärke im mm-Bereich haben, hervorragend auch für die Funktion im Bereich des Führungsleistensatzes eignen.

Wenn die Schneideinsätze des Führungsleistensatzes und/oder zumindest eines der vorhandenen Schneidensätze achsparallel ausgerichtet sind, ergeben sich weitere Vereinfachungen bei der Herstellung des Werkzeugs. Es ist jedoch hervorzuheben, dass das Werkzeug nicht grundsätzlich gerade genutet sein muss. Es kann vielmehr auch mit Schneiden im Bereich der Schneidensätze und des Führungsleistensatzes ausgestattet werden, die zumindest geringfügig positiv oder negativ gedrallt bzw. zur Achse des Werkzeugs angestellt sind.

Wie vorstehend bereits angesprochen, tragen die wendelförmig verlaufenden Führungsstege in Verbindung mit dem Kühl-/Schmiermittel in erheblichem Umfang zur Stabilisierung des Werkzeugs und damit zur Geradführung bei. Gleiches gilt für die stabilisierende Wirkung des Führungsleistensatzes.

Die stabilisierende Wirkung des Kühl-/Schmiermittels kann dann besonders effektiv gestaltet werden, wenn eine innenliegende Kühl-/Schmiermittelversorgung vorliegt. Auf diese Weise ist sichergestellt, dass die entscheidenden Bereiche des Werkzeugs kontinuierlich und ausreichend mit Kühl-/Schmiermittel versorgt werden, so dass der zur Stabilisierung benötigte Schmierfilm nicht abreißt. Eine derartige innenliegende Kühl-/Schmiermittelversorgung ist insbesondere bei der Trockenbearbeitung, d.h. bei Anwendung der MMS- (Minimalmengenschmierung) -Technologie von besonderem Vorteil.

Vorteilhafterweise wird jedem Führungssteg bzw. - so weit vorhanden -jedem Schneidensatz eine ausreichende Anzahl von Mündungsöffnungen für die Versorgung mit Kühl-/Schmiermittel zugewiesen. Die Anzahl und Lage der Mündungsöffnungen wird vorteilhafterweise empirisch bestimmt und vorteilhafterweise auf die Art des Kühl-/Schmiermittels und die Prozessparameter (Schmiermitteldichte, Schmiermittelvolumenstrom usw.) abgestimmt.

Damit das Bohrungs-Nachbearbeitungswerkzeug auch bei der Bearbeitung der weiter außen liegenden Bohrungen im Werkstück ausreichend stabil bleibt, ist es von Vorteil, den Spannabschnitt zur zentrierten Ankopplung des Werkzeugs gemäß Anspruch 11 auszubilden. Über den Spannflansch, der mit enger Planlauftoleranz bezüglich der Werkzeugachse hergestellt wird. kann das Werkzeug zusätzlich axial stabilisiert, d.h. zentriert werden.

Mit der Weiterbildung des Anspruchs 13 wird die eingangs beschriebene stabilisierende Wirkung des Führungskörper weiter optimiert. Es hat sich gezeigt, dass besonders gute Ergebnisse mit vier Führungsstegen erzielt werden, die sich jeweils über einen Zentri- bzw. Umschlingungswinkel von 360° erstrecken.

Weitere vorteilhafte Ausgestaltungen sind Gegenstand der übrigen Unteransprüche.

Nachstehend wird anhand schematischer Zeichnungen ein Ausführungsbeispiel der Erfindung näher erläutert. Es zeigen:

Fig. 1 eine Seitenansicht einer Ausführungsform eines mehrschneidigen, spanabhebenden Bohrungs-Nachbearbeitungswerkzeugs;

Fig. 2 in vergrößertem Maßstab einen Teilmodul des in Fig. 1 gezeigten Werkzeugs;

Fig. 3 in etwas vergrößertem Maßstab eine Einzelheit eines Werkzeugmoduls des Werkzeugs nach den Fign. 1 und 2;

Fig. 4 eine Seitenansicht eines Teil-Moduls der Komponente gemäß Fig. 2;

Fig. 5 die Ansicht gemäß "V" in Fig. 4;

Fig. 6 eine perspektivische Ansicht des Werkzeugmoduls gemäß Fig. 2; und

Fig. 7 eine perspektivische Ansicht des Gesamt-Werkzeugs.

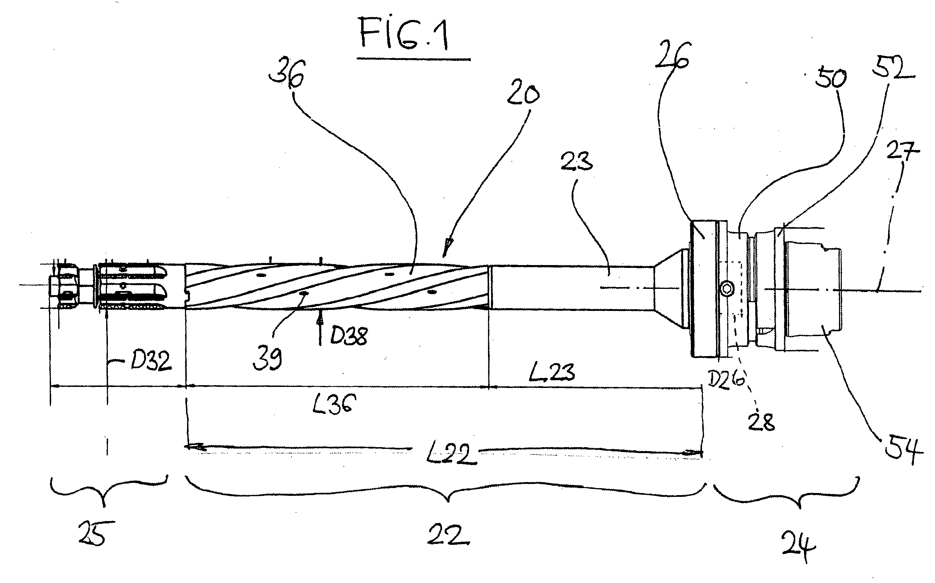

In Fig. 1 ist mit dem Bezugszeichen 20 ein mehrschneidiges, spanabhebendes und drehantreibbares Bohrungs-Nachbearbeitungswerkzeug in der Ausgestaltung als Reibahle bezeichnet, die im vorliegenden Fall als sogenanntes "Lagergassenwerkzeug" dient. Ein derartiges Werkzeug wird in der Automobilindustrie dann eingesetzt, wenn es darum geht, die Bohrungen für die Lager einer Kurbelwelle einer Brennkraftmaschine auf Endmaß zu bearbeiten. In einem solchen Fall wird also ein Werkzeug benötigt, welches in der Lage ist, die einzelnen zylindrischen Lager-Funktionsflächen mit größtmöglicher axialer Fluchtung, Genauigkeit und Oberflächengüte unter Einhaltung enger Toleranzen herzustellen. Das Werkzeug hat hauptsächlich drei Abschnitte, nämlich einen Schaft 22, einen Spannabschnitt 24 und ein Schneidteil 25.

Das gezeigte Werkzeug hat beispielsweise einen Nenndurchmesser von etwa 23 mm. Für ein konkretes Zerspanungsproblem bei der Herstellung der sogenannten "Lagergasse" wird eine Schneidteillänge von etwa 75 mm und eine Schaftlänge L22 von etwa 300 mm benötigt. Der Spannabschnitt 24 hat als wesentlichen Bestandteil einen Spannflansch 26, der einen ausreichend großen Durchmesser D26 hat, damit eine große Planfläche zum Anspannen des Werkzeugs 20 an einen Werkzeugsystemmodul ausgebildet wird.

Im gezeigten Ausführungsbeispiel hat der Spannflansch 26 beispielsweise einen Außendurchmesser von etwa 70 mm. Die Planfläche ist mit sehr hoher Laufgenauigkeit bezüglich der Werkzeugachse 27 bzw. bezüglich eines gestrichelt angedeuteten Zentrierfortsatzes 28 gefertigt, der beispielsweise von einem Zentrierzylinder oder aber auch von einem Zentrierkonus, insbesondere einem Hohlschaftkegel- (HSK) -Konus gebildet ist. Der Spannflansch 26 ist im gezeigten Ausführungsbeispiel an einen Ausgleichsadapter 50 angeschlossen, der einen nicht näher dargestellten Kühlmittel-Übergabesatz trägt und seinerseits einen Spannflansch 52 mit Hohlschaftkegel (HSK) 54 trägt, über den das Werkzeug an eine Spindel oder einen anderen Werkzeugsystemmodul angeschlossen werden kann.

Das in Fig. 1 gezeigte Werkzeug ist also modular aufgebaut, damit es an die jeweils vorliegenden Fertigungslinien der Motorenproduktion schnell und optimal angepasst werden kann. Dabei ist weiterhin eine Flexibilität hinsichtlich der zur Anwendung kommenden Zerspanungstechnologie gegeben. Über den Ausgleichsadapter 50 ist es beispielsweise möglich, die Art der Kühlung/Schmierung anzupassen, beispielsweise eine Umstellung von Nass- auf sogenannte Trockenbearbeitung (MMS-Technologie) vorzunehmen (MMS bedeutet Minimalmengenschmierung).

Die Einspannstelle des Werkzeugs, der Schaft und das Schneidteil sind ausreichend biegestabil, damit das Werkzeug die am Werkstück äußeren Lagerbohrungen so exakt wie möglich bearbeiten kann. Wenn das Werkzeug tiefer in das Werkstück eingefahren wird, sind besondere zusätzliche Vorkehrungen getroffen, um die Genauigkeit der Bohrung ebenso wie deren Oberflächengüte auf einem höchstmöglichen Niveau zu halten. Diese Maßnahmen werden im Folgenden näher erläutert.

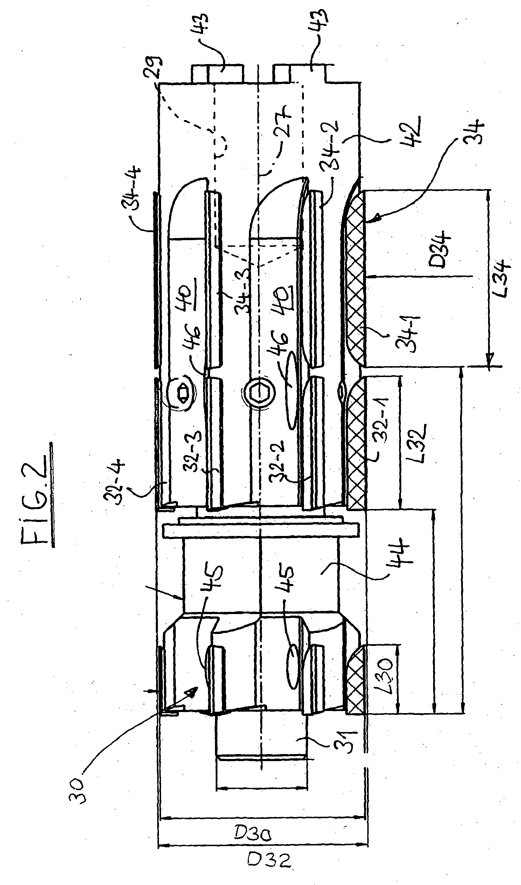

Hinter dem Schneidteil 25, dessen Aufbau weiter unten näher erläutert wird, ist ein im Wesentlichen zylindrischer Führungskörper 36 angeordnet, der aus Hartstoff, insbesondere aus Vollhartmetall (VHM) besteht und mit einem Schaftabschnitt 23 einerseits und dem Schneidteil 25 andererseits dreh- und axialfest verbunden ist. Vorzugsweise hat zu diesem Zweck der Führungskörper 36 an seinen beiden axialen Enden einen ZentrierZylinder, über den eine Schrumpfverbindung zu den aus Werkzeugstahl bestehenden Komponenten des Werkzeugs, d.h. zum Schaftstummel 23 und zum Schneidteil 25 (siehe Zentrierbohrung 29 in Figur 2) hergestellt wird.

In den Führungskörper 36 sind zumindest zwei wendeiförmige Nuten eingearbeitet, zwischen denen somit zwei in gleichmäßigem Umfangsabstand zueinander stehende, wendeiförmig verlaufende Führungsstege 38 entstehen, die vorzugsweise zylindrisch auf ein Nenndurchmessermaß D38 beschliffen sind. Dieses Nenndurchmessermaß ist im Wesentlichen um das doppelte Maß eines sich im Einsatz des Werkzeugs aufbauenden Schmierspalts kleiner als das Nenndurchmessermaß D32 eines in Vorschubrichtung benachbarten Schneidensatzes 32, der die Endbearbeitung der Lagergassenbohrung vornimmt. Bei dem gezeigten Ausführungsbeispiel ist der Nenndurchmesser des Schneidensatzes 32 auf etwa 23 mm eingestellt, wobei die Maßtoleranz bei 0 bis -3 $\mu$m liegt. Das Nenndurchmessemnaß D38 der Führungsstege ist in diesem Fall um etwa 14 $\pm$ 3 $\mu$m kleiner. Diese Nenndurchmesserdifferenz ist also gerade so groß, dass sich bei vorgegebenem Kühl-/Schmiermittel-Versorgungszustand zwischen der Außenoberfläche der Führungsstege 38 und der Innenwandung der vom Schneidensatz 32 soeben bearbeiteten Lagergassenbohrung ein stabiler Schmierspalts aufbaut, über den das Werkzeug 20 über den gesamten Umfang achsgenau und frei von Schwingungen geführt wird.

Bei dem gezeigten Ausführungsbeispiel sind vier in gleichmäßigem Umfangsabstand zueinander liegende wendeiförmige Führungsstege 38-1 bis 38-4 vorgesehen. Jeder dieser Führungsstege 38-1 bis 38-4 verläuft über einen ausreichend großen Umschlingungs- bzw. Zentriwinkel, der zumindest größer als 3607n ist, wobei n die Anzahl der Führungsstege 38-1 bis 38-4 bedeutet. Im gezeigten Ausführungsbeispiel beträgt der Zentriwinkel, über den die einzelnen Führungsstege 38-1 bis 38-4 entlang des Führungskörper 36 vertaufen, jeweils 360°, so dass sich eine besonders effektive Abstützung und damit Geradführung des Werkzeugs erzielen lässt.

Wie oben bereits angedeutet, ist das Werkzeug ist mit einer innenliegenden Kühl-/Schmiermittelversorgung ausgestattet, so das im Inneren des Schafts, d.h. im Inneren des Schaftstummels 23 ebenso wie im Inneren des Führungskörpers 36 und im Inneren des Schneidteils 25 eine vorzugsweise zentrische Ausnehmung für die Zufuhr des Kühl-/Schmiermittels vorliegt. Mit dem Bezugszeichen 39 sind Mündungsöffnungen von Stichkanälen bezeichnet, die von der innenliegenden Kühlmittelausnehmung vorzugsweise schräg zur Achse 27 zu den betreffenden Nuten des Führungskörpers 36 führen und dort zwischen den Führungsstegen 38-1 bis 38-4 axial gestaffelt austreten. Über die Mündungsöffnungen 39 gelangt - vorzugsweise empirisch bestimmt - Kühl-/Schmiermittel mit ausreichendem Druck und entsprechend optimierter Konsistenz (Dichte, Ölgehalt, Öltröpfchengröße, etc.) in den Raum zwischen dem Führungskörper und der Innenwandung der Bohrung, so dass der durchgehende Schmiermittelspalt zur Stabilisierung des Werkzeugs optimal versorgt werden kann.

Im Folgenden wird unter Bezugnahme auf die Fign. 2 bis 6 die Ausgestaltung des Schneidteils 25 näher erläutert. Wie sich am deutlichsten aus der Fig. 2 ergibt, besteht das Schneidteil 25 im Einzelnen aus zwei Modulen, einem ersten Schneidenmodul 42 und einem daran sich in Achsrichtung anschließenden zweiten Schneidenmodul 44. Der erste Schneidenmodul 42 hat auf der dem Führungskörper 36 zugewandten Seite einen diametralen Steg 43, über den eine drehfeste Passungsverzahnung mit einer entsprechenden diametralen Nut im Führungskörper 36 hergestellt werden kann. Im Zentrum des Schneidenmoduls 42 ist der diametral verlaufende Steg 43 durch die gestrichelt angedeutete eingebrachte Passungsbohrung 29 abgetragen. Über die Passungsbohrung 29 erfolgt die Aufschrumpfung auf einen nicht näher dargestellten, komplementären zylindrischen Fortsatz des Führungskörpers 36.

Der erste Schneidenmodul 42 trägt einen Schneidensatz 32, der im gezeigten Ausführungsbeispiel von sechs gleichmäßig über den Umfang verteilten Schneideinsätzen 32-1, 32-2, 32-3, 32-4 und (nicht gezeigten) Schneideinsätzen 32-5 und 32-6 gebildet ist. Es soll jedoch an dieser Stelle bereits hervorgehoben werden, dass die Zahl der Schneiden bzw. der Schneideinsätze nicht auf die Zahl sechs beschränkt ist.

Die Schneiden bzw. Schneideinsätze 32-1 bis 32-n sind axial ausgerichtet und haben eine Länge L32 im Bereich zwischen 13 und 17 mm. Sie sind beispielsweise von PKD (polykristalliner Diamant) bestückten Schneidplatten gebildet, bei denen ein Stahl-Trägerteil von etwa 0,5 bis 1 mm Dicke eine PKD-Auflage von etwa 0,5 mm trägt. Der Anschliff der Schneiden des Schneidensatzes 32 ist nach gängigen Kriterien ausgeführt, so dass eine Beschreibung von Einzelheiten hier entfallen kann.

Die Besonderheit des ersten Schneidenmoduls 42 gemäß Fig. 2 besteht allerdings darin, dass dem Schneidensatz 32 axial benachbart, d.h. in einem Abstand von wenigen mm ein Stützleistensatz 34 zugeordnet ist, der von einer Vielzahl von Stützleisten 34-1 bis 34-6 gebildet ist. Auch diese Stützleisten 34-1 bis 34-6 sind als hochpräzise positionierte, vorzugsweise zylindrisch geschliffene Schneideinsätze ausgebildet, die jeweils mit den Schneiden 32-1 bis 32-6 des in Vorschubrichtung des Werkzeugs benachbarten Schneidensatzes 32 axial fluchten. Der Stützleistensatz 34 ist derart, vorzugsweise zylindrisch, geschliffen, dass die Außenoberfläche bzw. die äußersten radialen Kanten auf einem Nenndurchmesser liegen, der im Wesentlichen um das doppelte Maß eines sich im Einsatz des Werkzeugs aufbauenden Schmierspalts kleiner als ist als das Nenndurchmessermaß D32 des in Vorschubrichtung benachbarten Schneidensatzes 32. Mit anderen Worten, das Maß D34 liegt in der Größenordnung des Durchmessers D38, so dass auch die dem Schneidensatz 32 eng benachbarten Stützleisten 34-1 bis 34-6 zur Stabilisierung des im Eingriff befindlichen Schneidensatzes 32 dienen.

Die axiale Länge L34 des Stützleistensatzes 34 ist geringfügig größer als die axiale Länge L32 des Schneidensatzes 32, sie liegt also im Bereich zwischen 15 und 25 mm. Die Schneideinsätze 34-1 bis 34-6 sind ähnlich aufgebaut wie die Schneideinsätze 32-1 bis 32-6, d.h. ebenfalls von PKD bestückten Schneidplatten gebildet, die eine Gesamtdicke von etwa 1 bis 1,5 mm haben.

Wie sich aus der Fig. 2 ergibt, liegen die jeweils miteinander axial fluchtenden Schneideinsätze des Schneidensatzes 32 und des Stützleistensatzes 34 jeweils in einer gemeinsamen Tasche 40, die in dem ersten Schneidenmodul 42 eingearbeitet ist. Dabei sind die Schneideneinsätze 32-1 bis 32-6 und 34-1 bis 34-6 derart in der Tasche 40 aufgenommen, dass die betreffende Werkzeug-Nebenschneide im Wesentlichen in einer durch die Werkzeugachse 27 verlaufenden Ebene liegt.

Wie vorstehend bereits angesprochen, sind die Schneideinsätze des Stützleistensatzes 34 am Außenumfang vorzugsweise zylindrisch geschliffen. Es ist jedoch hervorzuheben, dass es gleichermaßen möglich ist, die Schneideinsätze 34-1 bis 34-n schneidenähnlich anzuschleifen bzw. derart, dass ein negativer Nebenschneiden-Freiwinkel entsteht. Entscheidend ist lediglich, dass die Positionierung der Schneideinsätze 34-1 bis 34-n und deren Bearbeitung bzw. Formgebung so exakt ist, dass sich über die gesamte Länge L34 ein homogener Schmierspalt ergibt, über den das Werkzeug zusätzlich und wirksam geführt werden kann.

Der Schneidensatz 32 ist also ebenso wie der Stützleistensatz 34 mit jeweils sechs Schneiden bzw. schneidenähnlichen Körpern ausgestattet, die zueinander im Winkel im Abstand von jeweils 60° stehen. Da auch die Schneideinsätze 34-1 bis 34-n des Stützleistensatzes 34 mit den Schneiden des benachbarten Schneidensatzes 32 axial fluchten, liegt jeder Schneide des Schneidensatzes diametral und leicht axial versetzt ein stabilisierender Schmierspalt des Stützleistensatzes 34 gegenüber, so das Schnittkraft bedingten Ausweichbewegungen des Werkzeugs wirksam entgegengewirkt werden kann.

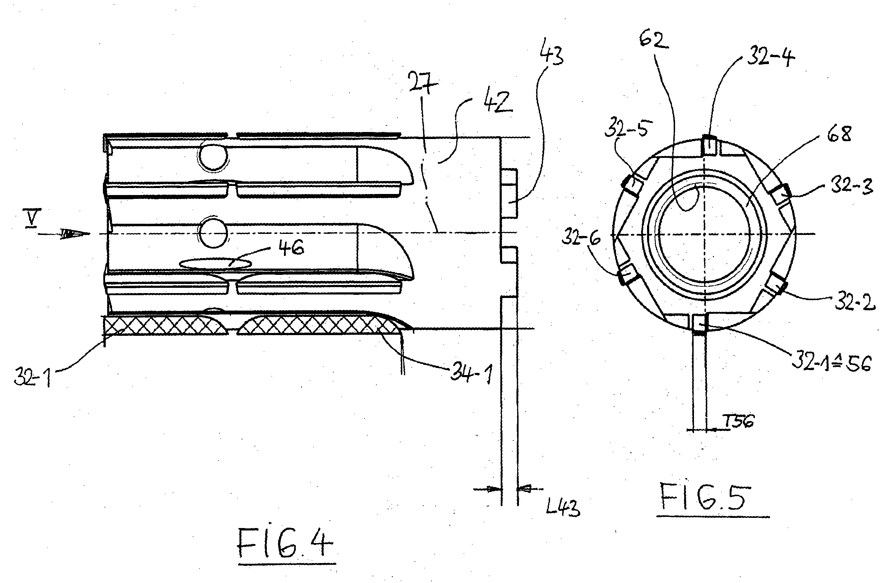

Wie aus der Fig. 2 weiter hervorgeht, trägt der erste Schneidenmodul 42 - beispielsweise mittels eines nicht näher gezeigten Innengewindes (das aber in Figur 5 gezeigt ist) - den zweiten Schneidenmodul 44, der mit seinem - ebenfalls nicht näher dargestellten - Gewindefortsatz in den ersten Schneidenmodul 42 geschraubt ist. Am vorderen Ende trägt der zweite Schneidenmodul 44 einen weiteren Schneidensatz 30, der einen mit D30 bezeichneten Außen-Nenndurchmesser hat. Dieser Nenndurchmesser D30 ist kleiner als der Nenndurchmesser D32 des Werkzeugs und beträgt bei dem gezeigten Ausführungsbeispiel etwa 22,5 mm. Auch dieser Schneidensatz 30 kann wiederum mit Schneideinsätzen 30-1 bis 30-n bestückt sein, die axial mit den Schneiden des Schneidensatzes 32 fluchten.

Im gezeigten Ausführungsbeispiel dient der Schneidensatz 30 zur Vorbearbeitung der Lagergassenbohrungen. Zu diesem Zweck ist der Nenndurchmesser des Schneidensatzes 30 um etwa 0,5 mm kleiner gehalten als der Nenndurchmesser des Schneidensatzes 32. Es ist jedoch gleichermaßen möglich, mit dem Schneidensatz 30 eine Stufenbohrung kleineren Durchmessers zu bearbeiten. Mit dem Bezugszeichen 31 ist ein Bauelement bezeichnet, mit dem der Schneidensatz 30 axial am zweiten Schneidenmodul 44 gesichert und/oder die zur Kühlmittelführung dienende Innenausnehmung des Werkzeugs verschlossen ist. Die drehfeste Verbindung zwischen dem zweiten Schneidenmodul 44 und dem Schneidensatz 30 erfolgt entweder durch einstückige Ausbildung oder durch eine formschlüssige Verzahnung der Komponenten.

Wie vorstehend bereits angesprochen, ist das Werkzeug 20 mit einer innenliegenden Kühl-/Schmiermittelversorgung ausgestattet, die über einen vorzugsweise zentrischen Kanal für eine ausreichende Versorgung der im Einsatz befindlichen Schneiden und Führungsstege mit Kühl-/Schmiermittel sorgt. Der im Inneren des Werkzeugs 20 vorgesehene zentrale Versorgungskanal erstreckt sich auch durch die Schnittstellen zwischen Führungskörper 36, erstem Schneidenmodul 42 und zweitem Schneidenmodul 44. Über das Bauelement 31 erfolgt dann ein Verschluss des innenliegenden Kanals.

Mit den Bezugszeichen 45 und 46 sind Mündungsöffnungen von vorzugsweise schräg zur Achse 27 des Werkzeugs verlaufenden Stichkanälen bezeichnet, die von der innenliegenden Kühl-/Schmiermittelausnehmung abzweigen. Wie ersichtlich, ist die Mündungsöffnung 46 im Bereich des Schneidensatzes 32 so angeordnet, dass sie nahe des Stützleistensatzes 34 liegt, so dass diese Mündungsöffnung zur Versorgung der Schneiden sowohl des Schneidensatzes 32 als auch des Stützleistensatzes 34 herangezogen werden kann.

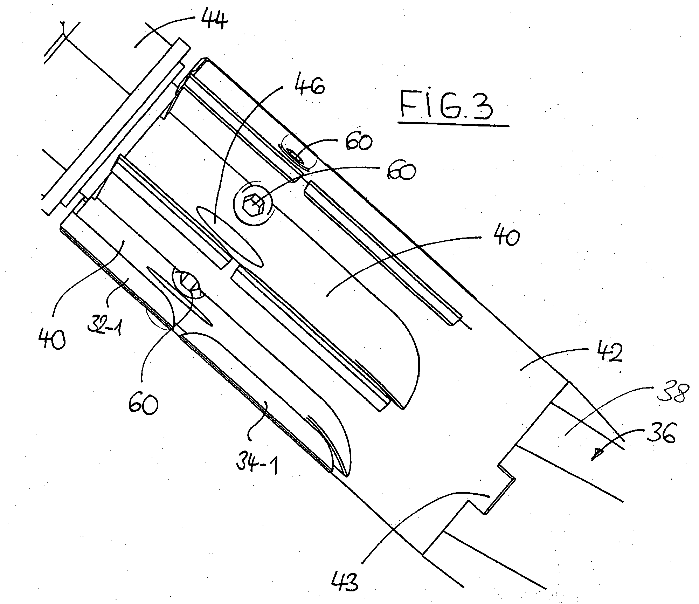

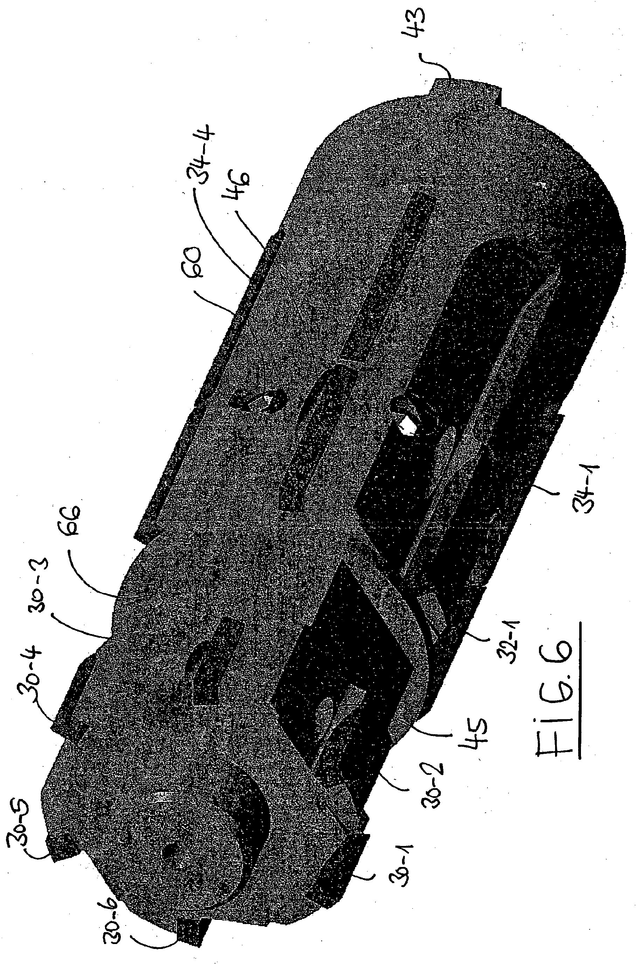

Mit 60 sind radial in den ersten Schneidenmodul 42 einschraubbare Gewindestifte bezeichnet, mit denen eine Auswuchtung bzw. Feinauswuchtung des Werkzeugs vorgenommen werden kann (siehe Figuren 3 und 6).

Wie sich ferner aus den Darstellungen nach den Fign. 1 und 2 ergibt. sind die Funktionsflächen, d.h. die Außendurchmesser des Schneidensatzes 30, des Schneidensatzes 32, des Stützleistensatzes 34 und des Führungskörpers 36 bzw. der Führungsstege 38 mit höchster Präzision und Lagezuordnung zur Werkzeugachse 27 gefertigt. Die Nenndurchmesser des Schneidensatzes 32, des Stützleistensatzes 34 und des Führungskörpers 36 sind im Toleranzbereich von 0 bis -3 $\mu$m gefertigt. Die Fertigungstoleranz des Nenndurchmessers des Schneidensatzes 30 liegt bei $\pm$ 20 $\mu$m. Die Laufgenauigkeit des Schneidensatzes 30 bezüglich der Spannfläche des Spannflansches 52 einerseits und bezüglich der Achse 27 bzw. des Spannkegels des Hohlschaftkegels (HSK) 54 liegt bei 5 $\mu$m. Diese Laufgenauigkeit ist bezüglich des Schneidensatzes 32, des Stützleistensatzes 34 und des Stützkörpers sogar auf 3 $\mu$m verringert.

Aus der vorstehenden Beschreibung wird demnach klar, dass das erfindungsgemäße Werkzeug in der Lage ist, die Innenbohrung einer Lagergasse bzw. sehr tief liegende koaxiale Bohrungen mit höchster Präzision und Lagegenauigkeit bei guter Oberflächengüte herzustellen. Weil der Führungskörper 36 die Führungsstege 38 als integralen Bestandteil eines Werkzeugmoduls ausbildet, ergibt sich zum einen der herstellungstechnische Vorteil, dass auf das Einsetzen von komplexen Führungsleisten verzichtet werden kann. Gleichzeitig ergibt sich eine große Flexibilität bei der Gestaltung des Werkzeugs bzw. bei dessen Anpassung an das jeweils vorliegende Zerspanungsproblem. Durch Austausch des Führungskörpers 36 kann die axiale Länge L22 des Werkzeugschafts 22 eingestellt werden, ohne dass es einer Neuherstellung des Werkzeugs im Bereich des Schneidensatzes 32 und/oder im Bereich des Schneidensatzes 30 bedarf. Auch im Bereich der Einspannstelle 26 und des Schaftstummels 23 kann der Werkzeugaufbau beibehalten werden, wodurch sich weitere Vorteile bei der Herstellung des Werkzeugs ergeben.

Das Werkzeug verfügt über eine Einrichtung zur Fein-Auswuchtung. Zusätzlich zu den Gewindestiften 60 im Bereich des ersten Schneidenmoduls 42 sind ähnliche axiale und/oder radiale Gewindestifte im Bereich des Spannflansches 26 vorgesehen, über deren Positionierung eine dynamische Fein-Auswuchtung des Werkzeugs möglich ist.

Die Abmessungen des Werkzeugs können selbstverständlich in weiten Grenzen variiert werden. Die Abmessungen der Ausgestaltung nach den Fign. 1 und 2 sind lediglich beispielhaft. Beispielsweise kann die axiale Abmessung L44 des zweiten Schneidenmoduls 44 selbstverständlich größer oder kleiner als das bei der Ausführungsform gezeigte Maß von etwa 20 bis 25 mm haben.

Auch die Festlegung des Nenndurchmessermaßes D34 bzw. D38 kann in Abhängigkeit vom Druck und von den physikalischen Parametern des zur Anwendung kommenden Kühl-/Schmiermittels variiert werden. Beim gezeigten Ausführungsbeispiel liegt die Nenndurchmesser-Differenz beispielsweise zwischen 11 und 17 $\mu$m. Für eine Nassbearbeitung kann diese Nenndurchmesser-Differenz auch größer sein.

In den Fign. 4 und 5 sind Einzelheiten des ersten Schneidenmoduls 42 herausgestellt. Man erkennt, dass die Schneideinsätze 32-1 bis 32-6 des Schneidensatzes 32 an der Stirnseite eine Anfasung von 0,1 x 45° haben. Entsprechendes gilt für die Schneideinsätze des Stützleistensatzes 34. In diesem Bereich sind die Schneideinsätze 34-1 bis 34-6 an dem in Vorschubrichtung vorlaufenden Ende mit einer Einführfase mit den Abmessungen 0,15 mm x 15° ausgestattet. Das Axialmaß L43 des Mitnehmer-Steges 43 ist bei der Variante gemäß Fig. 4 mit etwa 2 mm festgelegt.

Die Seitenansicht gemäß Fig. 5 lässt erkennen, wie die Schneideinsätze 32-1 bis 32-6 bezüglich der Werkzeugachse 27 zu liegen kommen. Man erkennt, dass die Nebenschneiden der Schneideinsätze 32-1 bis 32-6 um ein Maß von etwa 0,1 mm vor der Mitte liegen. Ferner ist ersichtlich, dass die Schneideinsätze eine PKD-Auflage in der Größenordnung von etwa 0,5 mm haben und eine Grundschlifffase von 0,5. Die Segmentdicke ist mit 1,6 mm angegeben. Sie kann jedoch auch bis herab zu etwa 1 mm gewählt werden.

Während für die Komponenten des Spannabschnitts, des Schaftstummels und der Schneidenmodule vorzugsweise Werkzeugstahl verwendet wird, kommt als Material für die Trägerplatte der Schneideinsätze vorteilhafterweise ein Vergütungsstahl wie z. B. 50CrV4 zur Anwendung.

Mit dem Bezugszeichen 62 ist in Fig. 5 ein Innengewinde bezeichnet, in das der zweite Schneidenmodul 44 geschraubt werden kann. Das Schraubgewinde des zweiten Schneidenmoduls 44 hat im Übergangsbereich zum Schneidteil einen Außenkonus, der sich beim Einschrauben an einer Gegen-Passungsfläche 68 des ersten Schneidenmoduls 42 abstützen kann. Über die konische Flächenpaarung lassen sich somit die Schneiden 32-1 bis 32-6 radial feinjustieren. Zu diesem Zweck ist der zweite Schneidenmodul 44 mit Abflachungen 66 zur Ausbildung einer Schlüsselweite versehen.

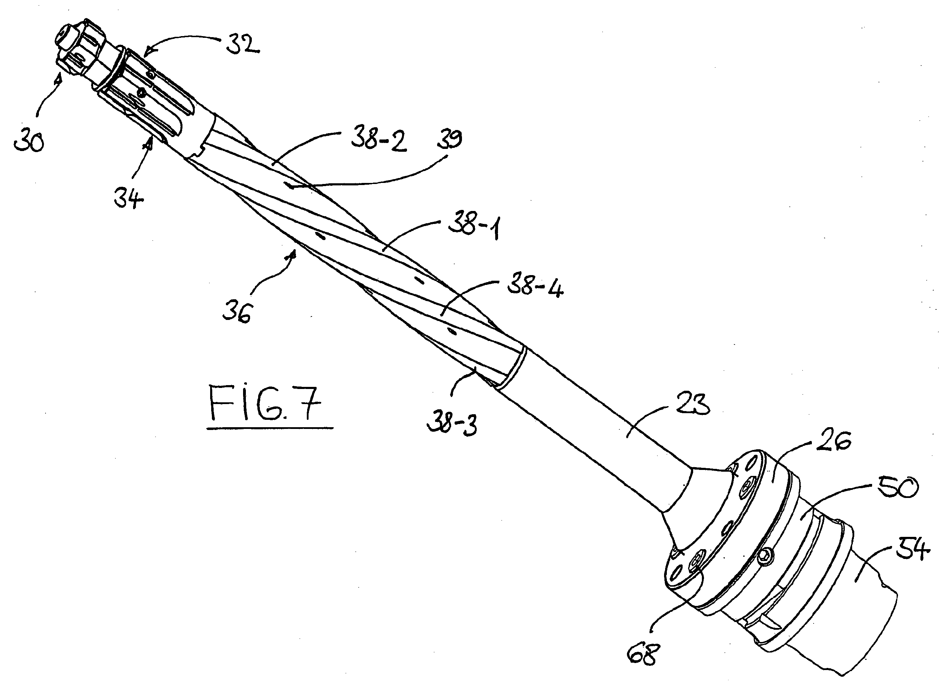

In Fig. 7 ist das Werkzeug perspektivisch in der Gesamtzusammenstellung dargestellt. Bauelemente, die den zuvor beschriebenen Komponenten entsprechen, sind hier mit den entsprechenden Bezugszeichen versehen. Man erkennt zusätzlich im Spannflansch 26 axiale Gewindestifte 68, über die eine zusätzliche Auswuchtmöglichkeit gegeben ist.

Selbstverständlich sind Abweichungen vom beschriebenen Ausführungsbeispiel möglich, ohne den Grundgedanken der Erfindung zu verlassen.

So kann beispielsweise die im Wesentlichen axiale Fluchtung zwischen den Schneiden des Schneidensatzes 32 und des Stützleistensatzes 34 auch dann eingehalten werden, wenn die Schneiden mit leichtem Links- oder Rechtsdrall ausgeführt werden, d.h. wenn der Spanwinkel der Nebenschneiden vorzugsweise geringfügig von 0° abweicht. Anstelle der Geradnutung des Werkzeugs sind dann auch die Taschen 40 zur Achse 27 des Werkzeugs leicht positiv oder negativ angestellt.

Die Schneidensätze 30 und 32 sind auch nicht notwendigerweise so aufgebaut, dass die Schneiden an Schneideinsätzen ausgebildet sind. Die Schneiden können auch einstückig mit einem Schneidenträger ausgebildet sein, der dann vorzugsweise aus einem Hartstoff, wie z. B. Vollhartmetall besteht.

Als Materialien für den ersten und den zweiten Schneidenmodul können auch andere Materialien, insbesondere auch unterschiedliche Materialien eingesetzt werden.

Vorstehend wurde beschrieben, dass die Stützleisten 34-1 bis 34-6 zylindrisch angeschliffen sind. Der Anschliff kann allerdings auch dahingehend modifiziert werden, dass sich in Drehrichtung des Werkzeugs eine Verbreiterung des Schmierspalts ergibt.

Entsprechendes gilt für die Außenoberfläche der Führungsstege 38-1 bis 38-4.

Der Anschliff der Schneideinsätze der Schneidensätze 30 und 32 wurde nicht im Einzelnen beschrieben. Hier können gängige Anschliffe zur Anwendung kommen, die bei Hochleistungs-Reibahlen in der Regel verwendet werden und auf deren detaillierte Beschreibung deshalb hier verzichtet werden kann. Es kann aber beispielsweise von Vorteil sein, die PKD bestückten Schneideinsätze in axialer Richtung geringfügig im Durchmesser über die Länge zu verjüngen, und zwar im 1/1000-stel-Bereich, beispielsweise um bis 12 bis 16 $\mu$m. Auch ist es von Vorteil, die PKD bestückten Schneideinsätze an den Kanten zu verrunden bzw. mit einer Rundfase zu versehen.

Anstatt jeder Schneide der Schneidensätze eine eigene Mündungsöffnung der Kühl-/Schmiermittelversorgung zuzuordnen, kann es im Einzelfall auch genügen, mehrere Schneiden über eine Mündungsöffnung zu versorgen.

Selbstverständlich ist es auch möglich, die Anzahl der Schneiden und/oder die Anzahl der Führungsstege zu variieren. Es sollte allerdings dafür gesorgt sein, dass das Werkzeug über eine weite axiale Strecke und über den gesamten Umfang über den Führungskörper abgestützt ist. Vorteilhafterweise sind also n in gleichmäßigem Umfangsabstand zueinander stehende, wendelförmige verlaufende Führungsstege vorhanden, die sich jeweils über einen Zentriwinkel erstrecken, der größer als 360°/n ist, wobei $n \geq 2$ sein soll.

Bei dem gezeigten Ausführungsbeispiel verläuft die Wendel der Führungsstege 38 in Drehrichtung. Es ist jedoch gleichermaßen möglich, die Wendel der Führungsstege 38 gegen die Drehrichtung festzulegen.

Anstatt jeder Schneide der Schneidensätze 30, 32, 34, 36 eine eigene Mündungsöffnung der Kühl-/Schmiermittelversorgung zuzuordnen, kann es im Einzelfall auch genügen, mehrere Schneiden über eine Mündungsöffnung zu versorgen.

Das vorstehend beschriebene Bohrungs-Nachbearbeitungswerkzeug in der Ausgestaltung als Stufen-Reibahle wurde vorstehend als drehangetriebenes Werkzeug beschrieben. Es ist jedoch gleichermaßen möglich, das Werkzeug stehend einzusetzen und die Zerspanung dadurch vorzunehmen, dass das Werkstück in Drehbewegung versetzt wird.

Das vorstehend beschriebene Werkzeug hat sechs über den Umfang gleichmäßig verteilte Schneiden. Die Anzahl der Schneiden kann jedoch in weiten Grenzen variiert werden, wobei allerdings in vorteilhafter Weise eine gerade Anzahl von Schneiden gewählt wird. Die Erfindung kann die eingangs beschriebenen Vorteile im Übrigen auch dann noch bereitstellen, wenn die Winkelabstände der über den Umfang verteilten Schneiden nicht exakt gleich groß sind.

Vorstehend wurde eine Ausführungsform des Werkzeugs beschrieben, das nur einen Durchmesser auf Präzision bearbeitet. Die Erfindung kann jedoch gleichermaßen zur Bearbeitung von gestuften Bohrungen in einem Arbeitsgang herangezogen werden, und dennoch alle oben angesprochenen Vorteile entfalten.

Somit ist ein mehrschneidiges spanabhebendes Boltrungs-Nachbearbeitungswerkzeug bzw. - Feinbearbeitungswerkzeug, insbesondere eine Reibahle, zur Bearbeitung tiefer bzw. mehrerer axial beabstandeter Bohrungen gleicher Abmessung und Güte, wie z. B. von Bohrungen zur Aufnahme von Lagerbuchsen für eine Nockenwelle geschaffen. Das Werkzeug hat zumindest einen Schneideinsatz mit vorbestimmten Nenndurchmessermaß und mit über den Umfang im Wesentlichen gleichmäßig verteilten Schneiden, sowie eine axial dazu versetzte Führungskörperanordnung. Zur Verbesserung der Führungsgenauigkeit bei gleichzeitiger Bereitstellung großer Flexibilität bei der Anpassung des Werkzeugs an das jeweils vorliegende Zerspanungsproblem ist die Führungskörperanordnung integraler Bestandteil eines aus Vollhartmetall (VHM) bestehenden, im Wesentlichen zylindrischen Führungskörpers. Dieser Führungskörper bildet zumindest n in gleichmäßigem Umfangsabstand zueinander stehende, wendelförmige verlaufende Führungsstege aus, denen ein Nenndurchmessermaß zugewiesen ist, das im Wesentlichen um das doppelte Maß eines sich im Einsatz des Werkzeugs aufbauenden Schmierspalt kleiner ist als das Nenndurchmessermaß des Schneidensatzes. Jeder Führungssteg erstreckt sich über einen Zentriwinkel hinweg, der größer als 360% ist. wobei n > 2 ist.

**Patentansprüche**

**1.** Mehrschneidiges spanabhebendes Bohrungs-Nachbearbeitungswerkzeug bzw. - Feinbearbeitungswerkzeug, insbesondere Reibahle, zur Bearbeitung tiefer bzw. mehrerer axial beabstandeter Bohrungen gleicher Abmessung und Güte, wie z.B. von Bohrungen zur Aufnahme von Lagerbuchsen für eine Nockenwelle, mit:

zumindest einem Schneidensatz (32) mit vorbestimmtem Nenndurchmessermaß (D32) und über den Umfang im Wesentlichen gleichmäßig verteilten Schneiden (32-1 bis 32-6) und
einer dazu axial versetzten Führungskörperanordnung,
wobei die Führungskörperanordnung integraler Bestandteil eines aus Vollhartmetall (VHM) bestehenden, im Wesentlichen zylindrischen Führungskörpers (36) ist, der zumindest n in gleichmäßigem Umfangsabstand zueinander stehende, wendelförmig verlaufende Führungsstege (38- 1 bis 38-4) ausbildet,
wobei die Führungsstege (38- 1 bis 38-4) sich jeweils über einen Zentri- bzw. Umschlingungswinkel erstrecken, der größer als 360°/n ist, wobei gilt:

$$n >= 2,$$

**dadurch gekennzeichnet, dass** den Führungsstegen (38- 1 bis 38-4) ein Nenndurchmessermaß (D38) zugewiesen ist, das im Wesentlichen um das doppelte Maß eines sich im Einsatz des Werkzeugs aufbauenden Schmierspalts kleiner ist als das Nenndurchmessermaß (D32) des in Vorschubrichtung benachbarten Schneidensatzes (32), und wobei das Werkzeug modular aufgebaut ist, wobei der Führungskörper (36) über eine Schrumpfverbindung einerseits mit einem den Schneidensatz (32) tragenden ersten Schneidenmodul (42) und andererseits mit einem Schaftteil (23) dreh- und verschiebefest verbunden ist, wobei zwischen dem Schneidensatz (32) und dem Führungskörper (36) ein weiterer Führungsleistensatz (34) in Form von hochpräzise positionierten, vorzugsweise zylindrisch geschliffenen Schneideinsätzen (34-1 bis 34-6) liegt, die jeweils mit den Schneiden (32-1 bis 32-6) des in Vorschubrichtung des Werkzeugs benachbarten Schneidensatzes (32) axial fluchten und ein Nenndurchmessermaß (D34) haben, das im Wesentlichen um das doppelte Maß eines sich im Einsatz des Werkzeugs aufbauenden Schmierspalts kleiner ist als das Nenndurchmessermaß (D32) des in Vorschubrichtung benachbarten Schneidensatzes (32), wobei das Maß, um das das Nenndurchmessermaß (D38) der Führungsstege (38) und des Führungsleistensatzes (34) kleiner ist als das Nenndurchmessermaß D des in Vorschubrichtung benachbarten Schneidensatzes (32) im Bereich zwischen 0,0002 bis 0,0016 x D, vorzugsweise im Bereich zwischen 0,0002 bis 0,0005 x D liegt.

**2.** Bohrungs-Nachbearbeitungswerkzeug nach Anspruch 1, **dadurch gekennzeichnet, dass** das Schaftteil (23) einen Spannabschnitt (26) zur zentrierten Ankopplung an einen Werkzeugsystemmodul bzw. eine Werkzeugaufnahme eines Werkzeugsystems hat.

**3.** Bohrungs-Nachbearbeitungswerkzeug nach einem der vorhergehenden Ansprüche, **dadurch gekennzeichnet, dass** die axiale Länge (L34) der Schneideinsätze (34-1 bis 34-6) des Führungsleistensatzes (34) mindestens der axialen Länge (L32) des in Vorschubrichtung benachbarten Schneidensatzes (32) entspricht.

**4.** Bohrungs-Nachbearbeitungswerkzeug nach einem der vorhergehenden Ansprüche, **dadurch gekennzeichnet, dass** der erste Schneidenmodul (42) auf der dem Führungskörper (36) abgewandten Seite lösbar einen weiteren Schneidenmodul (44) mit einem Schneidensatz (30) trägt, der einen kleineren Nenndurchmesser (D30) hat.

**5.** Bohrungs-Nachbearbeitungswerkzeug nach einem der vorhergehenden Ansprüche, **dadurch gekennzeichnet, dass** die Schneideinsätze (34- 1 bis 34-6) des Führungsleistensatzes (34) und/oder zumindest eines der Schneidensätze (30, 32) von PKD (Polykristalliner Diamant)-bestückten Schneidplatten (56) gebildet sind.

**6.** Bohrungs-Nachbearbeitungswerkzeug nach einem der vorhergehenden Ansprüche, **dadurch gekennzeichnet, dass** die Schneiden der Schneideinsätze (34-1 bis 34-6) des Führungsleistensatzes (34) und/oder zumindest eines der Schneidensätze (30, 32) achsparallel ausgerichtet sind.

**7.** Bohrungs-Nachbearbeitungswerkzeug nach einem der vorhergehenden Ansprüche, **gekennzeichnet durch** eine innenliegende Kühl/Schmiermittelversorgung.

**8.** Bohrungs-Nachbearbeitungswerkzeug nach Anspruch 7, **dadurch gekennzeichnet, dass** jeder Schneide der Schneidensätze (30, 32, 34) und/oder jedem Führungssteg (38) zumindest eine Mündungsöffnung (45, 46, 39) der Kühl-/Schmiermittelversorgung zugeordnet ist.

**9.** Bohrungs-Nachbearbeitungswerkzeug nach einem der vorhergehenden Ansprüche, **dadurch gekennzeichnet, dass** der Spannabschnitt (26) zur zentrierten Ankopplung an die Werkzeugaufnahme eines Werkzeugsystems einen Zentrierfortsatz (28), insbesondere einen Hohlschaftkegel (HSK) und einen auf der Achse (27) des Zentrierfortsatzes senkrecht stehenden Spannflansch (26) aufweist.

**10.** Bohrungs-Nachbearbeitungswerkzeug nach einem der vorhergehenden Ansprüche, **dadurch gekennzeichnet, dass** der Nebenschneiden-Freiwinkel der Schneideinsätze (34-1 bis 34-6) des Führungsleistensatzes etwa 0° beträgt.

**11.** Bohrungs-Nachbearbeitungswerkzeug nach einem der vorhergehenden Ansprüche, **dadurch gekennzeichnet, dass** sich die Führungsstege (38) jeweils über einen Zentri- bzw. Umschlingungswinkel von zumindest 360° erstrecken.

**12.** Bohrungs-Nachbearbeitungswerkzeug nach einem der vorhergehenden Ansprüche, **dadurch gekennzeichnet, dass** die Zahl n der Führungsstege (38) größer oder gleich 4 ist.

**13.** Bohrungs-Nachbearbeitungswerkzeug nach einem der vorhergehenden Ansprüche, **dadurch gekennzeichnet, dass** die axiale Länge (L36) des Führungskörpers (36) im Bereich zwischen 6 bis 8 x D liegt, wobei D dem größten Nenndurchmesser des Werkzeugs entspricht.

## Claims

**1.** Multi-edged machining tool for post machining of bores or finishing tool, particularly a reamer, for treating deeper or several axially spaced bores of similar dimensions and quality, such as bores to get bearing bushes for a camshaft, with: :

at least one cutting set (32) with predetermined nominal diameter value (D32) and over the extent in particular evenly spaced blades (32-1 to 32-6) and

a thereto axially offset guiding system arrangement,

where the guiding system arrangement is an integral component of an existing particularly cylindrical guiding system (36) made from Solid Carbide (SC), which forms helically running guiding rails (38- 1 to 38-4) standing to each other at least in even circumferential spacing, where the guiding rails (38- 1 to 38-4) extend respectively over a central angle or wrap angle, which is greater than 360°/n, where:

$$n >= 2,$$

applies, **characterized in that** a nominal diameter value (D38) is assigned to the guiding rails (38- 1 to 38-4), which particularly around the double measure of a lubrication gap built in the insert of the tool is smaller than the nominal diameter value (D32) of the adjacent cutting set (32) in the feed-direction, and where the tool is built modularly, where the guiding system (36) over a shrink joint is connected on-one-side with a first blade module (42) bearing the cutting set (32) and on-the-other-side with a shaft part (23) in a twist- and dislocation-proof manner, where between the cutting set (32) and the guiding system (36) lies an additional guiding set (34) in the form of precisely positioned, preferably cylindrically cut cutting inserts (34-1 to 34-6), which align respectively with the blades (32-1 to 32-6) of the adjacent cutting set (32) in advance direction of the tool axial and have a nominal diameter value (D34), which particularly around the double measure of a lubrication gap built in the inset of the tool is smaller than the nominal diameter value (D32) of the adjacent cutting set (32) in the feed-direction, where the measure, around which the nominal diameter value (D38) of the guiding rails (38) and of the Guiding set (34) is smaller than the nominal diameter value D of the adjacent cutting set in the feed-direction (32) lies in the range between 0.0002 to 0.0016 x D, preferably in the range between 0.0002 to 0.0005 x D.

**2.** Tool for post machining of bores according to claim 1, **characterized, in that** the shaft part (23) has a clamping section (26) at the centralized coupling on a tool system module or a tool holder of a tool system.

**3.** Tool for post machining of bores according to any of the preceding claims **characterized, in that** the axial length (L34) of the cutting inserts (34-1 to 34-6) of the guiding set (34) corresponds at least to the axial length (L32) of the adjacent cutting set (32) in the feed-direction.

**4.** Tool for post machining of bores according to any of the preceding claims **characterized, in that** the first blade module (42) on which the side not-facing the guiding system (36) holds a detachable extra blade module (44) with a cutting set (30), which has a smaller nominal diameter (D30).

**5.** Tool for post machining of bores according to any of the preceding claims **characterized in that** the cutting inserts (34- 1 to 34-6) of the guiding set (34) and/or at least on of the cutting inserts (30, 32) are made of PKD (Polycrystalline Diamond)-fitted cutting plates (56).

**6.** Tool for post machining of bores according to any of the preceding claims **characterized in that** the blades of the cutting inserts (34-1 to 34-6) of the guiding set (34) and/or at least of one of the cutting inserts (30, 32) are oriented axially parallel.

**7.** Tool for post machining of bores according to any of the preceding claims **characterized by** an internal cooling lubricant supply system.

**8.** Tool for post machining of bores according to claim 7, **characterized in that** every blade of the cutting inserts (30, 32, 34) and/or each guiding rail (38) at least one discharge opening (45, 46, 39) of the cooling lubricant supply system is attached.

**9.** Tool for post machining of bores according to any of the preceding claims **characterized in that** the clamping section (26) at the centralized connection to the tool holder of a tool system features a centering projection (28), particularly a hollow shaft cone (HSC) and a clamping flange standing perpendicularly on the axis (27) of the centering projection (26).

**10.** Tool for post machining of bores according to any of the preceding claims **characterized in that** the clearance angle of the secondary cutting edge of the cutting inserts (34-1 to 34-6) of the guiding set around amounts to 0°.

**11.** Tool for post machining of bores according to any of the preceding claims **characterized, in that** the guiding rails (38) extend respectively over a central angle or wrap angle of at least 360°.

**12.** Tool for post machining of bores according to any of the preceding claims **characterized, in that** the number of guiding rails (38) is greater than or equal to 4.

**13.** Tool for post machining of bores according to any of the preceding claims **characterized, in that** the axial length (L36) of the guiding system (36) lies in the range between 6 to 8 x D, where D corresponds to the greatest nominal diameter of the tool.

## Revendications

1. Outil de reprise d'alésages à plusieurs arêtes de coupe et à enlèvement de matière ou outil de finition, particulièrement un alésoir, pour traiter des alésages plus profonds ou nombreux et espacés en direction axiale de dimensions et qualité semblables, tels que des alésages pour obtenir des bagues fixes pour un arbre à cames, avec :

   au moins un ensemble de coupe (32) avec une valeur de diamètre nominal prédéterminée (D32) et dans une même mesure de lames espacées uniformément (32-1 à 32-6) et :

   un agencement du système de guidage décalé sur un axe
   où l'agencement du système de guidage est une composante intégrale d'un système de guidage particulièrement cylindrique (36) composé de carbure monobloc, formant des rails de guidage de forme hélicoïde (38-1 à 38-4) positionnés sur un espacement périphérique égal,
   où les rails de guidage (38-1 à 38-4) sont étendus respectivement sur un angle central ou angle d'enroulement plus grand que 360°/n, où :

$$n >= 2,$$

   s'applique, **caractérisé par** une valeur de diamètre nominal (D38) assigné aux rails de guidage (38- 1 à 38-4), qui particulièrement autour de la double mesure d'un entrebâillement de lubrification conçu dans l'insertion de l'outil est plus petit que la valeur nominale du diamètre (D32) de l'ensemble de coupe adjacent (32) dans le sens d'alimentation, et où l'outil est conçu de manière modulaire, où le système de guidage (36) au-dessus d'un joint de serrage est connecté sur un bord avec un premier module de coupe (42) portant l'ensemble de coupe (32) et sur l'autre bord un segment lame (23) avec un mode résistant à la torsion et dislocation, où, entre l'ensemble de coupe (32) et le système de guidage (36), se trouve un ensemble additionnel de guidage (34) positionné avec précision, avec des insertions de coupe préférablement coupés en forme cylindrique (34-1 à 34-6), qui s'alignent respectivement avec les lames (32-1 à 32-6) de l'ensemble de coupe adjacent (32) en direction avancée de l'outil axial et ayant une valeur de diamètre nominale (D34), qui particulièrement autour de la double mesure de l'entrebâillement de lubrification conçu dans l'insertion de l'outil est plus petit que la valeur nominale du diamètre (D32) de l'ensemble de coupe adjacent (32) dans le sens d'alimentation, où la mesure, autour de laquelle la valeur de diamètre nominale (D38) des rails de guidage (38) et l'ensemble de guidage (34) est plus petit que la valeur de diamètre nominale D de l'ensemble de coupe adjacent défini dans le sens de l'alimentation (32) se trouve entre 0,0002 à 0,0016 x D, de préférence entre 0,0002 à 0,0005 x D.

2. Outil de reprise d'alésages selon la Revendication 1, **caractérisé par** le segment lame (23) doté d'une section de serrage (26) au point d'accouplement multiple d'un système d'outils modulaire ou un porte-outil d'un système d'outils.

3. Outil de reprise d'alésages selon l'une des revendications précédentes, **caractérisé par** la longueur axiale (L34) des insertions de coupe (34-1 à 34-6) de l'ensemble de guidage (34) correspondant au moins à la longueur axiale (L32) de l'ensemble de coupe adjacent (32) dans le sens d'alimentation.

4. Outil de reprise d'alésages selon l'une des revendications précédentes, **caractérisé par** le premier module de coupe (42) sur lequel le côté qui ne fait pas face au système de guidage (36) tient un module de coupe supplémentaire détachable (44) avec un ensemble de coupe (30), dont le diamètre nominal (D30) est plus petit.

5. Outil de reprise d'alésages selon l'une des revendications précédentes **caractérisé par** les insertions de coupe (34 - 1 à 34-6) de l'ensemble de guidage (34) et/ou au moins l'une des insertions de coupe (30, 32) sont faites de plaques de coupes (56) ajustées au diamant polycrystallin (PKD).

6. Outil de reprise d'alésages selon l'une des revendications précédentes **caractérisé par** les lames des insertions de coupe (34-1 à 34-6) de l'ensemble de guidage (34) et/ou au moins l'une des insertions de coupe (30, 32) est orientée sur un axe parallèle.

7. Outil de reprise d'alésages selon l'une des revendications précédentes **caractérisé par** un système interne de lubrification de refroidissement.

8. Outil de reprise d'alésages selon la revendication 7, **caractérisé par** l'attachement de toutes les lames des insertions de coupe (30, 32, 34) et/ou tous les rails de guidage (38) à au moins un orifice de décharge (45, 46, 39) du système interne de lubrification de refroidissement.

**9.** Outil de reprise d'alésages selon l'une des revendications précédentes **caractérisé par** la section de serrage (26) à la connexion centrale du porte-outil d'un système d'outils possède une projection de centrage (28), particulièrement un cône d'arbre creux (CAC) et une bague de serrage positionnée de façon perpendiculaire sur l'axe (27) de la projection de centrage (26).

**10.** Outil de reprise d'alésages selon l'une quelconque des revendications précédentes, **caractérisée en ce que** l'angle de dépouille de l'arête de coupe secondaire des plaquettes de coupe (34-1 à 34-6) de l'ensemble de guidage autour équivaut à 0°.

**11.** Outil de reprise d'alésages selon l'une des revendications précédentes **caractérisé par** les rails de guidage (38) étendus respectivement sur un angle central d'enroulement d'au moins 360°.

**12.** Outil de reprise d'alésages selon l'une des revendications précédentes **caractérisé par** le nombre des rails de guidage (38) plus élevé ou égal à 4.

**13.** Outil de reprise d'alésages selon l'une des revendications précédentes **caractérisé par** la longueur axiale (L36) du système de guidage (36) se trouve entre 6 et 8 x D, où D correspond au plus grand diamètre nominal de l'outil.

FIG.1
52
27
54
50
24
28
D26
26
23
L23
20
L22
22
36
D38
L36
39
D32
25

FIG.2
43
43
29
27
42
34
34-2
34-4
34-3
40
40
46
46
D34
L34
34-1
32-1
32-2
32-3
32-4
L32
44
45
45
L30
30
31
D30
D32

FIG.3
44
46
60
60
40
40
42
38
36
43
34-1
60
32-1
40

32-4
68
32-3
32-2
32-1≙56
62
32-5
32-6
T56
FIG.5
43
42
27
L43
34-1
46
FIG.4
V
32-1

43
34-4
46
60
66
30-3
30-4
34-1
32-1
45
30-2
30-5
30-1
30-6
FIG. 6

54
50
26
23
68
38-4
38-1
39
38-2
38-3
36
32
34
30
FIG.7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19719893 A1
- JP 52131293 A
- JP 2001310205 A